(19) Europäisches Patentamt
European Patent Office
Office européen des brevets

(11) EP 1 076 372 A1

(12) # DEMANDE DE BREVET EUROPEEN

(43) Date de publication:
**14.02.2001 Bulletin 2001/07**

(51) Int Cl.[7]: **H01M 10/34**, H01M 10/44

(21) Numéro de dépôt: **00402019.4**

(22) Date de dépôt: **13.07.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **09.08.1999 FR 9910311**

(71) Demandeur: **ALCATEL**
**75008 Paris (FR)**

(72) Inventeurs:
- **Berlureau, Thierry**
**33300 Bordeaux (FR)**
- **Liska, Jean-Louis**
**33160 St Medard en Jalles (FR)**

(74) Mandataire: **Laroche, Danièle et al**
**COMPAGNIE FINANCIERE ALCATEL**
**Dépt. Propriété Industrielle,**
**30, avenue Kléber**
**75116 Paris (FR)**

(54) **Accumulateur étanche nickel-métal hydrurable**

(57) L'accumulateur étanche nickel-métal hydrurable comprend au moins une électrode positive dont la matière électrochimiquement active est un hydroxyde contenant principalement du nickel et au moins une électrode négative dont la matière électrochimiquement active est un composé intermétallique capable de former un hydrure une fois chargé. La capacité totale négative dépasse la capacité totale positive d'une quantité d'au moins 15% appelée surcapacité. Une partie de la surcapacité, appelée précharge, est partiellement à l'état chargé une fois l'électrode positive complètement déchargée, et l'autre partie, appelée excédent, est sous forme déchargée une fois l'électrode positive complètement chargée. La précharge est inférieure à 10% de la surcapacité négative, et de préférence inférieure à 6%.

EP 1 076 372 A1

## Description

La présente invention concerne un accumulateur étanche nickel-métal hydrurable (Ni-MH) dont les capacités massique et volumique sont améliorées et la durée de vie prolongée. Il s'agit plus précisément d'un accumulateur de capacité élevée, d'au moins 10Ah, destiné aux applications aéronautiques, stationnaire et ferroviaire, ou bien encore utilisé pour la propulsion d'un véhicule électrique. Ces accumulateurs sont habituellement associées en batterie.

Un accumulateur est formé par l'association d'au moins une électrode positive dont la matière électrochimiquement active est principalement un hydroxyde de nickel $Ni(OH)_2$, et d'au moins une électrode négative dont la matière électrochimiquement active est un composé intermétallique M hydrurable. L'électrolyte est une solution alcaline concentrée comprenant plusieurs hydroxydes (KOH, NaOH, LiOH). Un séparateur, généralement en polyoléfine -ou en polyamide, est placé entre l'électrode positive et l'électrode négative.

La charge de l'accumulateur s'effectue selon la réaction électrochimique suivante : l'hydroxyde de nickel Ni $(OH)_2$ s'oxyde pour atteindre une valence du nickel supérieure à 2, pendant que l'hydrure métallique MH se forme simultanément par transfert de proton :

$$\text{forme déchargée} \quad Ni(OH)_2 + M \underset{\text{décharge}}{\overset{\text{charge}}{\rightleftarrows}} NiOOH + MH \quad \text{forme chargée}$$

L'électrode positive contient la matière électrochimiquement active mais aussi d'autres composants, notamment un matériau conducteur destiné à accroître la conductivité de l'électrode et certains additifs requis par le procédé de mise en forme. En charge, ces composants s'oxydent également, provoquant en parallèle la réduction d'une partie de la matière active négative.

Le matériau conducteur comprend habituellement du cobalt métallique ($Co^0$) et de l'hydroxyde de cobalt ($Co^{2+}$) qui se transforment en $Co^{3+}$ afin d'assurer la conduction électrique dans l'électrode ; cette réaction n'est pas réversible. Quant aux additifs organiques ajoutées pour faciliter la mise en forme de l'électrode, ils s'oxydent de manière irréversible dans les tout premiers cycles.

Dès le début de la vie de l'accumulateur, ces réactions irréversibles dans l'électrode positive induisent dans l'électrode négative une capacité chargée, appelée "précharge", non déchargeable en accumulateur étanche. Cette précharge mobilise inutilement une forte proportion de l'alliage hydrurable, et réduit les capacités massique et volumique potentielles de l'électrode négative, et donc de l'accumulateur.

Lorsque l'électrode positive est chargée, le dégagement d'oxygène s'amorce, et le gaz dégagé vient se réduire (ou se recombiner) sur l'électrode négative. Il est indispensable d'éviter en fin de charge le dégagement d'hydrogène sur l'électrode négative car l'augmentation de la pression gazeuse interne provoquerait l'ouverture de la soupape de sécurité. Une fois l'électrode positive entièrement chargée, l'électrode négative doit donc contenir encore un "excédent" de matière active non chargée.

Au cours du cyclage, l'excédent de capacité négative est consommé principalement par corrosion de l'alliage selon les réactions :

$$\text{(I)} \qquad (1+d)M + d\,H_2O \rightarrow M(OH)_d + d\,MH$$

$$\text{(II)} \qquad (1+d)M + d/2\,H_2O \rightarrow MO_{d/2} + d\,MH$$

où d est le degré moyen d'oxydation de l'alliage M.

La matière active constituant l'excédent se charge progressivement et vient accroître d'autant la précharge inutilisable. La durée de vie de l'accumulateur dépend donc étroitement de la quantité de matière active excédentaire non chargée.

Au cours d'une surcharge ou d'une surdécharge accidentelle, la pression interne d'un accumulateur Ni-MH peut augmenter dans des proportions importantes. Afin de maintenir un équilibre réversible dans l'accumulateur en toutes conditions, le brevet français FR-2 382 776 enseigne qu'il est nécessaire que la quantité de matériau électrochimiquement actif de l'électrode négative soit supérieure à celle du matériau de l'électrode positive et que la masse électrochimiquement active de l'électrode négative soit partiellement présente à l'état chargé lorsque l'électrode positive est à l'état complètement déchargé. De préférence la capacité électrochimique totale de l'électrode négative dépasse d'au moins 15% celle de l'électrode positive pour atteindre ce but, la partie indéchargeable de la capacité négative représentant de préférence au moins 10% de cette capacité supplémentaire.

La présente invention a pour but de proposer un accumulateur Ni-MH dont la durée d'utilisation est allongée sans réduire les capacités massique et volumique de l'accumulateur.

L'objet de la présente invention est un accumulateur étanche nickel-métal hydrurable Ni-MH comprenant au moins une électrode positive dont la matière électrochimiquement active est un hydroxyde contenant principalement du nickel et au moins une électrode négative dont la matière électrochimiquement active est un composé intermétallique capable de former un hydrure une fois chargé. La quantité totale de matière électrochimiquement active de ladite électrode négative dépasse la quantité totale de matière électrochimiquement active de ladite électrode positive de telle sorte que la capacité totale négative dépasse la capacité totale positive d'une quantité d'au moins 15% appelée surcapacité. Une partie de ladite surcapacité appelée précharge est partiellement à l'état chargé une fois ladite électrode positive complètement déchargée et l'autre partie appelée excédent est sous forme déchargée une fois ladite électrode positive complètement chargée.

L'accumulateur selon l'invention est caractérisé en ce que ladite précharge est inférieure à 10% de ladite surcapacité négative, lorsque l'électrode positive est à l'état complètement déchargé.

La précharge doit représenter la proportion la plus faible possible de la surcapacité négative, de manière à augmenter l'excédent de capacité négative sans augmenter la surcapacité. L'excédent de capacité représente donc plus de 90% de la surcapacité négative. La consommation de cet excédent réduit la durée de vie de l'accumulateur. La durée de vie de l'accumulateur est donc d'autant plus longue que la quantité de matière active non-chargée constituant l'excédent est importante. De préférence ladite précharge est inférieure à 6%, et de préférence encore inférieure à 2%, de ladite surcapacité négative.

Ladite surcapacité négative est de préférence comprise entre 20% et 60%, c'est à dire que les quantités de matière électrochimiquement active des électrodes sont choisies de façon que la capacité totale négative soit comprise entre 1,20 et 1,60 fois la capacité totale positive. De préférence encore ladite surcapacité est comprise entre 38% et 46% de la capacité positive.

On entend par hydroxyde de nickel, un hydroxyde contenant principalement du nickel mais aussi au moins un hydroxyde syncristallisé d'un élément choisi parmi le zinc, le cadmium, le magnésium et l'aluminium ; il peut contenir également au moins un hydroxyde syncristallisé d'un élément choisi parmi le cobalt, le manganèse, l'yttrium, le calcium et le zirconium.

La présente invention a comme avantage de prolonger la durée de vie de l'accumulateur sans pénaliser ses performances. Lors de la mise en service de l'accumulateur, la surcapacité négative est majoritairement composée d'un excédent de capacité non chargée dont dépend la durée d'utilisation. En cours d'utilisation, l'excédent de capacité peut être régénéré, prolongeant d'autant la vie de l'accumulateur.

La présente invention a aussi pour objet un procédé de réduction de la précharge d'un accumulateur nickel-métal hydrurable tel que décrit précédemment comprenant un traitement consistant à décharger au moins une partie de ladite précharge.

Selon un premier mode de réalisation de l'invention, ledit traitement consiste à effectuer une décharge à régime modéré dudit accumulateur. De préférence ladite décharge est effectuée à un régime au plus égal à Ic (où Ic est le courant nécessaire à la décharge de la capacité nominale C en une heure).

Le traitement de réduction de la précharge consiste à sur-décharger l'électrode positive, ce qui conduit à son inversion et au dégagement d'hydrogène sur l'électrode positive. En parallèle la précharge négative est déchargée.

Bien entendu la capacité surdéchargée ne doit pas dépasser la valeur de la précharge négative au moment où commence le traitement de réduction de la précharge. La matière électrochimiquement active chargée, constituant la précharge avant traitement de réduction, vient augmenter l'excédent négatif une fois déchargée.

Selon une première variante, ledit traitement provoque un dégagement d'hydrogène sur l'électrode positive et l'accumulateur est muni d'une soupape dont la pression d'ouverture, inférieure à 3 bars relatifs, permet l'expulsion de l'hydrogène.

La pression interne de l'accumulateur s'accroît à cause de l'hydrogène dégagé. Lorsque l'accumulateur est fermé, cette augmentation de pression provoque l'expulsion des gaz par la soupape dès que sa pression d'ouverture est atteinte. Ceci a l'avantage d'évacuer, en même temps que l'hydrogène, l'azote présent dans l'accumulateur et donc d'abaisser la pression de fonctionnement ultérieure.

Mais dans ce cas on ne contrôle pas une éventuelle réabsorption par l'électrode négative de l'hydrogène dégagé à l'électrode positive. On peut éliminer cet inconvénient en évacuant l'hydrogène au fur et à mesure de son dégagement, notamment par pompage.

Selon une deuxième variante, ledit traitement provoque un dégagement d'hydrogène sur l'électrode positive et ledit hydrogène est évacué à l'extérieur de l'accumulateur au fur et à mesure de sa formation.

Selon un deuxième mode de réalisation, ledit traitement consiste à stocker ledit accumulateur à une température au moins égale à la température ambiante (20°C). La température maximale que peut subir l'accumulateur est imposée par l'électrolyte aqueux. De préférence la température dudit stockage est comprise entre 40°C et 90°C.

Selon une première variante, ledit traitement provoque un dégagement d'hydrogène sur l'électrode négative et l'accumulateur est muni d'une soupape dont la pression d'ouverture, inférieure à 3 bars relatifs, permet l'expulsion de l'hydrogène.

Le traitement de réduction de la précharge met en jeu un processus thermodynamique de désorption solide-gaz en accumulateur lié à la différence de pression d'hydrogène entre l'hydrure métallique et son environnement. Il est favorisé par une élévation de la température de l'hydrure et/ou une baisse de la pression d'hydrogène ambiante, notamment par pompage ou utilisation d'une soupape à basse pression.

Selon une deuxième variante, ledit traitement provoque un dégagement d'hydrogène sur l'électrode négative et ledit hydrogène est évacué à l'extérieur de l'accumulateur au fur et à mesure de sa formation.

La durée du stockage dépend de la température à laquelle il s'effectue. Elle est généralement d'au moins 15 minutes et peut atteindre 24 heures.

Selon un troisième mode de réalisation, ledit traitement consiste à introduire dans l'accumulateur un agent oxydant capable de décharger ledit composé intermétallique. L'agent oxydant est par exemple de l'air, de l'oxygène, de l'eau oxygénée, ou un ion nitrate.

Selon une première forme d'exécution, le procédé de réduction de la précharge décrit précédemment est appliqué à la fabrication d'un accumulateur nickel-métal hydrurable. Le traitement de réduction de la précharge est effectué après la formation électrique dudit accumulateur et avant sa mise en service.

Un traitement analogue peut aussi être appliqué à un accumulateur en cours d'utilisation, dont la précharge a augmenté en cyclage du fait de la décharge incomplète de l'électrode positive. Un tel traitement permet d'accroître l'excédent de capacité négative pendant le cyclage et de prolonger la durée de vie de l'accumulateur.

Selon une deuxième forme d'exécution, le procédé de réduction de la précharge décrit précédemment est appliqué à la régénération d'un accumulateur nickel-métal hydrurable en cours d'utilisation.

L'invention sera mieux comprise et d'autres avantages et particularités apparaîtront à la lecture de la description qui va suivre, donnée à titre illustratif et non limitatif, accompagnée des dessins annexés parmi lesquels :

- la figure 1 représente schématiquement la capacité d'une électrode positive et la capacité d'une électrode négative de l'accumulateur avant l'exécution du traitement de réduction de la précharge,
- la figure 2, analogue à la figure 1, représente schématiquement la capacité d'une électrode positive et la capacité d'une électrode négative de l'accumulateur selon la présente invention après l'exécution du traitement de réduction de la précharge.

EXEMPLE 1

On réalise un accumulateur W1 selon l'art antérieur de capacité nominale C = 21Ah.

L'accumulateur comporte une électrode positive de type empâté comprenant un support, qui est une mousse de nickel, et une couche active. La couche active est constituée par une pâte contenant la matière électrochimiquement active qui est introduite dans la porosité du support. La matière électrochimiquement active est un hydroxyde à base de nickel contenant notamment du cobalt syncristallisés.

L'accumulateur comporte aussi une électrode négative à support mousse dont la matière électrochimiquement active est un alliage hydrurable de type $AB_5$.

Les électrodes sont disposées de part et d'autre d'un séparateur en feutre de polyoléfine ou de polyamide pour former un faisceau électrochimique. Le faisceau électrochimique est placé dans un conteneur et imprégné d'un électrolyte alcalin comprenant un mélange d'hydroxyde de potassium (KOH), d'hydroxyde de sodium (NaOH), et d'hydroxyde de lithium (LiOH) à une concentration de 8,5N en solution aqueuse. Le couvercle est ensuite ajusté et fixé de manière étanche au conteneur.

Après fermeture du conteneur, l'accumulateur est soumis à deux cycles électriques pour la formation de la matière électrochimiquement active dans les conditions suivantes :

- charge à un régime compris entre Ic/100 et Ic/3 (où $I_c$ est le courant nécessaire à la décharge de la capacité nominale C en une heure), puis
- décharge à Ic/3 jusqu'à 1,0V.

L'accumulateur W1 obtenu comprend une électrode positive 1 de capacité totale Cp et une électrode négative 2 de capacité totale Cn supérieure à Cp, comme représentées sur la figure 1. La différence entre les capacités Cp et Cn, appelée surcapacité Cs, est constituée par une précharge 3 qui reste à l'état chargé (Cc) lorsque l'électrode positive est complètement déchargée et un excédent de capacité 4 qui reste à l'état déchargé (Cd) lorsque l'électrode positive est complètement chargée.

EXEMPLE 2

On réalise un accumulateur Xl selon la présente invention de capacité nominale C = 21Ah, analogue à celui de l'exemple 1 à l'exception du fait que le deuxième cycle de formation comprend une décharge supplémentaire au-delà de 1V à un régime de Ic/3 pendant laquelle les dégagements gazeux sont évacués à l'extérieur à l'aide d'une pompe afin d'éviter que l'hydrogène dégagé à l'électrode positive ne soit réabsorbé par l'électrode négative.
L'électrode positive s'inverse dès que la tension du faisceau électrochimique atteint -0,35V. La précharge de l'électrode négative est pratiquement annulée lorsque la tension du faisceau électrochimique atteint -0,40V. La décharge est alors arrêtée à -0,40V pour ne pas surdécharger l'électrode négative, ce qui conduirait à sa détérioration irréversible.
Ainsi la précharge initiale est minimisée, c'est à dire la partie de la précharge générée par la formation de la positive.
La capacité déchargée lors de cette décharge supplémentaire est de 3,5Ah, soit 17% de la capacité nominale C de l'accumulateur.

EXEMPLE 3

On réalise un accumulateur X2 selon la présente invention de capacité nominale C = 21Ah, analogue à celui de l'exemple 2 à l'exception du fait que la décharge supplémentaire est poursuivie au-delà de -0,40V à un régime de Ic/5, ce qui porte la capacité déchargée lors de cette décharge supplémentaire à 0,5Ah, soit 2% de la capacité nominale C.
L'accumulateur comprend alors une électrode positive 1 de capacité totale Cp et une électrode négative 12 de capacité totale Cn comme représentées sur la figure 2. L'électrode négative 12 possède une précharge 13 qui est très inférieure à la précharge 3 de l'électrode négative 2 de l'exemple 1 et un excédent 14 qui est supérieur à l'excédent 4 de l'électrode négative 2 de l'exemple 1.

EXEMPLE 4

On réalise un accumulateur Y1 selon la présente invention de capacité nominale C = 21Ah, analogue à celui de l'exemple 1 à l'exception du fait que l'accumulateur est stocké pendant 4,5 heures à 40°C.
A la fin du stockage la pression interne de l'accumulateur par rapport à la pression atmosphérique est de -0,97 bar relatif (soit 30mbars absolus).

EXEMPLE 5

On réalise un accumulateur Y2 selon la présente invention analogue à celui de l'exemple 4 à l'exception du fait que le stockage est réalisé à 70°C pendant 40mn.
A la fin du stockage la pression interne de l'accumulateur par rapport à la pression atmosphérique est de -0,90 bar relatif (soit 100mbars absolus).

EXEMPLE 6

On réalise un accumulateur Y3a selon la présente invention de capacité nominale C = 21Ah, analogue à celui de l'exemple 4 à l'exception du fait que le stockage est réalisé à 90°C pendant 25mn.
A la fin du stockage la pression interne de l'accumulateur par rapport à la pression atmosphérique est de -0,8 bar relatif (soit 200mbars absolus).

EXEMPLE 7

On réalise un accumulateur Y3b selon la présente invention analogue à celui de l'exemple 6 à l'exception du fait que le stockage est réalisé à 90°C pendant 1 heure, le conteneur n'étant pas fermé de manière à laisser s'échapper le gaz. A la fin du stockage la pression interne de l'accumulateur est de 1 bar absolu (pression atmosphérique).
Les accumulateurs fabriqués précédemment ont été évalués électrochimiquement de la manière suivante.
On a mesuré après formation et traitement supplémentaire éventuel la résistance interne R des accumulateurs exprimée en $m\Omega.dm^2$, et leur capacité réelle Cp (en Ah) en les déchargeant à un régime de Ic/3 jusqu'à 1 Volt. La capacité de l'accumulateur est limitée par la capacité positive.
Ensuite les accumulateurs ont été démontés. On a mesuré en décharge à un régime de Ic/3 la capacité totale négative Cn (en Ah) et la surcapacité Cs (en Ah) qui comprend la précharge négative Cc (en Ah) et l'excédent de

capacité négative Cd (en Ah).

On a calculé la surcapacité négative Cs par rapport à la capacité positive Cp (en %), et la proportion de cette surcapacité Cs qui constitue la précharge Cc (en %).

Puis on a évalué l'efficacité E (en %) du traitement de réduction de la précharge défini comme la quantité de précharge éliminée par le traitement par rapport à la précharge d'une électrode non-traitée.

Enfin on a suivi le dégagement d'hydrogène sur l'électrode négative par la variation de pression ΔP (en bar) au cours d'une charge à un régime de Ic/3.

Les résultats obtenus sont rassemblés dans le tableau ci-dessous.

TABLEAU

| Accumulateur | W1 | X1 et X2 | Y1 | Y2 | Y3a | Y3b |
|---|---|---|---|---|---|---|
| Traitement effectué | aucun | déch. suppl. | 40°C 4,5h | 70°C 40mn | 90°C 25mn | 90°C 1h |
| R (mΩ.dm$^2$) | 15,1 | 15,1 | 16,1 | 17,4 | 18,2 | 13,8 |
| Cp (Ah) | 21,2 | 21,2 | 21,2 | 20,7 | 20,4 | 20,7 |
| Cn (Ah) | 29,6 | 29,6 | 29,6 | 29,6 | 29,6 | 29,6 |
| Cs (Ah) | 8,4 | 8,4 | 8,4 | 8,9 | 9,2 | 8,9 |
| Cs / Cp (%) | 39,5 | 39,5 | 39,5 | 44,5 | 45 | 44,5 |
| Cd (Ah) | 4,4 | 8,35 | 7,95 | 8,8 | 9,1 | 8,8 |
| Cc (Ah) | 4,0 | 0,05 | 0,45 | 0,1 | 0,1 | 0,1 |
| Cc/Cs (%) | 48 | 0,6 | 5,4 | 1,1 | 1,1 | 1,1 |
| E (%) | 0 | 99 | 89 | 98 | 98 | 98 |
| ΔP (bar) | 1,8-2,1 | 0,3-0,5 | 0,6-0,7 | 0,5-0,7 | 0,4-0,5 | 0,5-0,7 |

On constate que dans tous les cas (exemples 2 à 7) le traitement destiné à diminuer la précharge s'est révélé efficace en permettant de réduire la précharge d'au moins 89% (accumulateur Y1), allant dans certains cas jusqu'à une quasi-annulation (accumulateurs X1 et X2).

La pression en fin de charge est faible (inférieure à 1 bar relatif et, dans certains, cas inférieure à la pression atmosphérique) par rapport à celle que l'on observe lorsqu'il n'y a pas eu de traitement de réduction de la précharge.

Bien entendu un traitement analogue à l'un de ceux décrits dans les exemples peut être également appliqué pour la régénération d'un accumulateur en cours d'utilisation, afin de réduire la précharge qui a augmenté au cours du cyclage.

## Revendications

1. Accumulateur étanche nickel-métal hydrurable comprenant au moins une électrode positive dont la matière électrochimiquement active est un hydroxyde contenant principalement du nickel et au moins une électrode négative dont la matière électrochimiquement active est un composé intermétallique capable de former un hydrure une fois chargé, la quantité totale de matière électrochimiquement active de ladite électrode négative dépassant la quantité totale de matière électrochimiquement active de ladite électrode positive de telle sorte que la capacité totale négative dépasse la capacité totale positive d'une quantité d'au moins 15% appelée surcapacité, une partie de ladite surcapacité appelée précharge étant partiellement à l'état chargé une fois ladite électrode positive complètement déchargée et l'autre partie appelée excédent étant sous forme déchargée une fois ladite électrode positive complètement chargée, caractérisé en ce que ladite précharge est inférieure à 10% de ladite surcapacité négative.

2. Accumulateur selon la revendication 1, dans lequel ladite précharge est inférieure à 6% de ladite surcapacité négative.

3. Accumulateur selon l'une des revendications 1 et 2, dans lequel ladite précharge est inférieure à 2% de ladite surcapacité négative

4. Accumulateur selon l'une des revendications précédentes, ladite surcapacité négative est supérieure à 20% et

inférieure à 60%.

**5.** Procédé de réduction de la précharge d'un accumulateur selon l'une des revendications précédentes, comprenant un traitement consistant à décharger au moins une partie de ladite précharge.

**6.** Procédé selon la revendication 5, dans lequel ledit traitement consiste à effectuer une décharge à régime modéré dudit accumulateur.

**7.** Procédé selon la revendication 6, dans lequel ladite décharge est effectuée à un régime au plus égal à Ic, où Ic est le courant nécessaire à la décharge de la capacité de l'accumulateur en une heure.

**8.** Procédé selon la revendication 5, dans lequel ledit traitement consiste à stocker ledit accumulateur à une température au moins égale à la température ambiante.

**9.** Procédé selon la revendication 8, dans lequel la température dudit stockage est comprise entre 40°C et 90°C.

**10.** Procédé selon l'une des revendications 5 à 9, dans lequel ledit traitement provoque un dégagement d'hydrogène, l'accumulateur étant muni d'une soupape dont la pression d'ouverture inférieure à 3 bars relatifs permet l'expulsion de l'hydrogène.

**11.** Procédé selon l'une des revendications 5 à 9, dans lequel ledit traitement provoque un dégagement d'hydrogène et ledit hydrogène est évacué à l'extérieur de l'accumulateur au fur et à mesure de sa formation.

**12.** Procédé selon la revendication 5, dans lequel ledit traitement consiste à introduire dans l'accumulateur un agent oxydant capable de décharger ledit composé intermétallique.

**13.** Application du procédé de réduction de la précharge selon l'une des revendications précédentes, à la fabrication d'un accumulateur nickel-métal hydrurable.

**14.** Application du procédé de réduction de la précharge selon l'une des revendications précédentes, à la régénération d'un accumulateur nickel-métal hydrurable en cours d'utilisation.

FIG. 1

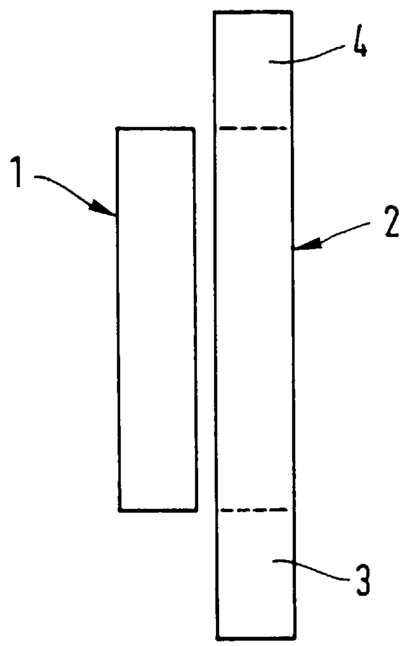


FIG. 2

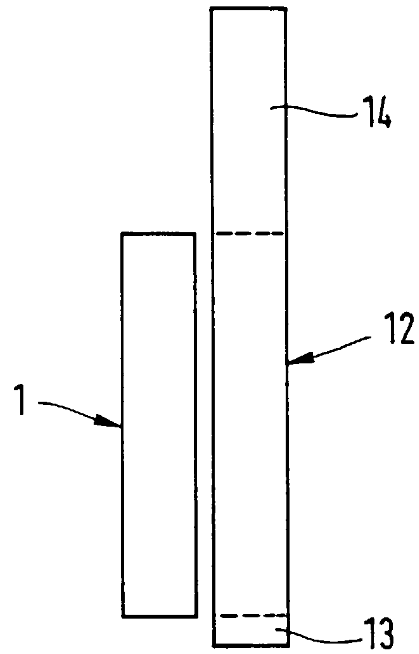

Office européen des brevets

# RAPPORT DE RECHERCHE EUROPEENNE

Numéro de la demande
EP 00 40 2019

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 275 127 A (RITTERMAN PAUL F ET AL) 23 juin 1981 (1981-06-23) * figure 4 * * colonne 2, ligne 31 - ligne 49 * * colonne 3, ligne 65 - colonne 4, ligne 20 * * colonne 4, ligne 53 - colonne 5, ligne 4 * | 1,5,6,13 | H01M10/34 H01M10/44 |
| D,A | FR 2 382 776 A (PHILIPS NV) 29 septembre 1978 (1978-09-29) * page 3, ligne 24 - ligne 37 * * page 4, ligne 9 - ligne 24 * * revendications 1-5 * | 1,13 | |
| A | EP 0 341 782 A (PHILIPS NV) 15 novembre 1989 (1989-11-15) * colonne 1, ligne 1 - ligne 30 * * colonne 2, ligne 39 - ligne 46 * | 1,13 | |
| A | US 4 643 959 A (GLOETZL KARL ET AL) 17 février 1987 (1987-02-17) * colonne 2, ligne 35 - ligne 46 * * colonne 3, ligne 35 - ligne 58 * | 1,12 | DOMAINES TECHNIQUES RECHERCHES (Int.Cl.7) H01M |

Le présent rapport a été établi pour toutes les revendications

| Lieu de la recherche | Date d'achèvement de la recherche | Examinateur |
|---|---|---|
| LA HAYE | 22 novembre 2000 | Gamez, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 00 40 2019

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-11-2000

| Document brevet cité au rapport de recherche | Date de publication | Membre(s) de la famille de brevet(s) | Date de publication |
|---|---|---|---|
| US 4275127 A | 23-06-1981 | AUCUN | |
| FR 2382776 A | 29-09-1978 | NL 7702259 A | 05-09-1978 |
| | | NL 7801243 A,B, | 05-09-1978 |
| | | AT 143578 A | 15-10-1980 |
| | | BE 864453 A | 01-09-1978 |
| | | CA 1097734 A | 17-03-1981 |
| | | DE 2808433 A | 07-09-1978 |
| | | DK 91578 A,B, | 04-09-1978 |
| | | GB 1579714 A | 26-11-1980 |
| | | IT 1111422 B | 13-01-1986 |
| | | JP 1493633 C | 20-04-1989 |
| | | JP 53111439 A | 29-09-1978 |
| | | JP 61005264 B | 17-02-1986 |
| | | SE 440712 B | 12-08-1985 |
| | | SE 7802243 A | 04-09-1978 |
| | | YU 49478 A | 21-01-1983 |
| | | US 4214043 A | 22-07-1980 |
| EP 0341782 A | 15-11-1989 | NL 8801233 A | 01-12-1989 |
| | | DE 68906071 D | 27-05-1993 |
| | | DE 68906071 T | 21-10-1993 |
| | | DK 228389 A | 12-11-1989 |
| | | JP 2002221 C | 20-12-1995 |
| | | JP 2018876 A | 23-01-1990 |
| | | JP 7032026 B | 10-04-1995 |
| | | US 4943500 A | 24-07-1990 |
| | | US 4999906 A | 19-03-1991 |
| US 4643959 A | 17-02-1987 | DE 3416817 A | 07-11-1985 |
| | | DD 234531 A | 02-04-1986 |
| | | DE 3576100 D | 29-03-1990 |
| | | DE 3587343 A | 17-06-1993 |
| | | EP 0160845 A | 13-11-1985 |
| | | EP 0293017 A | 30-11-1988 |
| | | IL 74926 A | 31-10-1988 |
| | | JP 60240069 A | 28-11-1985 |
| | | US 4735874 A | 05-04-1988 |

EPO FORM P0460

Pour tout renseignement concernant cette annexe : voir Journal Officiel de l'Office européen des brevets, No.12/82